Europäisches Patentamt

European Patent Office

Office européen des brevets

(19)

(11) **EP 1 276 639 B1**

(12) **EUROPÄISCHE PATENTSCHRIFT**

(45) Veröffentlichungstag und Bekanntmachung des
Hinweises auf die Patenterteilung:
**18.05.2005 Patentblatt 2005/20**

(21) Anmeldenummer: **01919181.6**

(22) Anmeldetag: **08.03.2001**

(51) Int Cl.⁷: **B60R 21/01**

(86) Internationale Anmeldenummer:
**PCT/DE2001/000897**

(87) Internationale Veröffentlichungsnummer:
**WO 2001/072557 (04.10.2001 Gazette 2001/40)**

(54) **VORRICHTUNG UND VERFAHREN ZUM ERFASSEN EINES OBJEKTES ODER EINER PERSON IM INNENRAUM EINES FAHRZEUGES**

DEVICE AND METHOD FOR DETECTING AN OBJECT OR A PERSON IN THE PASSENGER COMPARTMENT OF A VEHICLE

DISPOSITIF ET PROCEDE PERMETTANT DE DETECTER UN OBJET OU UNE PERSONNE DANS L'HABITACLE D'UN VEHICULE

(84) Benannte Vertragsstaaten:
**DE FR GB IT**

(30) Priorität: **28.03.2000 DE 10015274**

(43) Veröffentlichungstag der Anmeldung:
**22.01.2003 Patentblatt 2003/04**

(73) Patentinhaber: **SIEMENS
AKTIENGESELLSCHAFT
80333 München (DE)**

(72) Erfinder:
• **ARNOLD, Martin
81669 München (DE)**
• **STIERLE, Thomas
93059 Regensburg (DE)**

(56) Entgegenhaltungen:
EP-A- 1 031 477        WO-A-99/54173
US-A- 4 683 373        US-A- 5 330 226
US-A- 5 482 314        US-A- 5 541 695
US-A- 5 585 625        US-A- 5 752 115
US-A- 5 848 802

EP 1 276 639 B1

**Beschreibung**

Die Erfindung betrifft eine Vorrichtung und ein Verfahren zum Erfassen eines Objektes oder einer Person im Innenraum eines Fahrzeuges, wobei die Vorrichtung einen Laser zum Aussenden von LaserLaserlaserlichtpulseen und einen optischen Empfänger für an dem Objekt oder der Person reflektierte LaserLaserlichtpulse aufweist und das Verfahren zumindest das Aussenden eines LaserLaserlichtpulses und das Empfangen eines an dem Objekt oder der Person reflektierte Laserlichtpules beinhaltet.

Weit in Richtung Armaturenbrett vorverlagerte Personen, insbesondere Kinder, sind während des Betriebs eines mit Airbag ausgestatteten Kraftfahrzeuges der Gefahr ausgesetzt, durch die Aufblaswucht des Airbags bei einem Unfall Verletzungen zu erleiden. Moderne Steuerungssysteme für den Personenschutz sind bestrebt, den Airbag in derartigen Situationen abzuschalten oder mit vermindeter Wucht aufzublasen, um die Gefahr einer Verletzung eines Insassen abzuwenden. Zur Ermittlung der Insassenposition im Fahrzeug werden vorzugsweise berührungslose, optische Sensoren eingesetzt.

Eine bekannte Vorrichtung zum berührungslosen Erkennen eines Objektes oder einer Person im Innenraum eines Fahrzeuges ist beispielsweise aus der US 5,585,625 oder der EP 0 669 227 bekannt. Dabei wird der Fahrzeugsitz durch eine Anzahl von Leuchtdioden bestrahlt. Vom Fahrzeugsitz bzw. einer Person oder einem Objekt auf dem Fahrzeugsitz reflektierte Strahlen werden durch ein Fotodetektorfeld aufgenommen.

Als Lichtquelle des optischen Erfassungssystems wird vorzugsweise ein Laser eingesetzt, der eine aufgrund seiner monochromen Strahlung ertsgenaue Abtastung ermöglicht. Gewöhnlich werden Laserdioden und insbesondere Halbleiterlaserdioden als Sender verwendet.

Um eine andauernde energetische Belastung von Personen im Fahrzeuginnenraum durch den Laser zu vermeiden, wird der Laser pulsbetrieben. Aber auch in diesem Betriebsmodus darf der Insasse keinesfalls aufgrund der ausgesendeten LaserLaserlichtpulsee gesundheitlich beeinträchtigt werden.

Der nächste Stand der Technik gemäß dem Oberbegriff von Anspruch 1 wird durch das Dokument EP 1031477 A gebildet; es stellt einen Stand der Technik nach Art. 54(3),(4) EPÜ dar.

Aufgabe der Erfindung ist es, ausgehend von der eingangs genannten bekannten Vorrichtung und dem eingangs genannten bekannten Verfahren zum Erfassen eines Objektes oder einer Person im Innenraum eines Fahrzeugs, Vorkehrungen zu treffen, die eine Verwendung eines Lasers ohne Beeinträchtigung des Gesundheitszustandes eines Kraftfahrzeuginsassen erlauben.

Der die Vorrichtung betreffende Teil der Aufgabe wird durch die Merkmale des Patentanspruches 1 gelöst. Der das Verfahren betreffende Teil der Aufgabe wird durch die Merkmale des Patentanspruchs 6 gelöst. Ausgestaltungen und Weiterbildungen des Erfindungsgedankens sind Gegenstand von Unteransprüchen.

Die Erfindung hat den Vorteil, dass sowohl die kurzzeitige Leistung als auch die Gesamtleistung über einen großen Zeitraum so gering wie möglich gehalten und dennoch ein sicheres Erkennen der Insassenposition gewährleistet wird.

Erreicht wird dies bei einer Vorrichtung der eingangs genannten Art durch eine mit dem Laser verbundene Erfassungseinrichtung, die die Empfangsleistung bestimmt und bei Erreichen eines einer hinreichenden Empfangsleistung entsprechenden Grenzwertes den Laserlichtpuls abschaltet.

Bei einer Weiterbildung des erfindungsgemäßen Verfahrens ist beim Empfang des LaserLaserlichtpulses eine Fernerfassung und eine Naherfassung vorgesehen, wobei die Empfangssignale bei der Fernerfassung und Naherfassung jeweils integriert werden und die Summe aus beiden jeweils integrierten Empfangssignalen bei Fernerfassung und Naherfassung mit dem Grenzwert verglichen werden. Die entsprechende Erfassungseinrichtung ist dazu mit zwei optischen Sensoren gekoppelt, von denen der eine zur Fernerfassung und der andere zur Naherfassung dient. Die Integration der Sensorsignale wird mittels Integrationseinrichtungen durchgeführt, denen eine Komparatorstufe nachgeschaltet ist, welche die Summe der Ausgangssignale der Integrationseinrichtungen mit dem Grenzwert vergleicht. Durch die Aufzeichnung der gesamten Leistung, also die Summe der Leistungen aus Nah- und Fernerfassung, steht bereits der Quotient für die Entfernungsbestimmung in Form einer Spannung zur Verfügung und vereinfacht den Mess- und Auswerteaufwand für die Insassenerkennung erheblich. Zur Insassenerkennung braucht nur noch das Ergebnis der Fernerfassung ausgelesen werden und man hat ohne Weiteres ein Maß für die Entfernung. Durch die Doppelnutzung der Nah- und Fernerfassung lässt sich somit erheblicher Aufwand einsparen. Darüber hinaus ermöglicht die getrennte Nah- und Fernerfassung eine wesentlich genauere Bestimmung der Gesamtleistung.

Bevorzugt umfassen die Sensoren jeweils eine in Sperrrichtung betriebene Fotodiode sowie gegebenenfalls zwei zur Fotodiode parallel geschaltete Stromquellen, von denen die eine einen Konstantstrom und die andere einen pulsierenden Konstantstrom abgibt.

Bei einer Weiterbildung der Erfindung weist die Integrationseinrichtung eine Einrichtung zur Umgebungslichtkompensation auf. Durch die Unterdrückung der Umgebungslichtkomponente wird sowohl die Messung der tatsächlich abgegebenen Leistung als auch die Messung der Entfernung wesentlich genauer.

Dabei kann die Einrichtung zur Umgebungslichtkompensation ein Integratorelement aufweisen, das das Ausgangssignal des jeweiligen Sensors abzüglich eines Korrektursignals integriert, davon ein Referenzsignal subtrahiert und die sich daraus ergebende Differenz - ein Korrektursignal bildend - integriert.

Die Erfindung wird nachfolgend anhand der in den Figuren der Zeichnung dargestellten Ausführungsbeispiele näher erläutert. Es zeigt:

Fig. 1     einen Querschnitt einer Fahrgastzelle,

Fig. 2     ein Blockschaltbild einer erfindungsgemäßen Vorrichtung,

Fig. 3     eine Steuereinrichtung mit zwei optischen Sensoren zur Nah- und Fernerfassung bei einer erfindungsgemäßen Vorrichtung,

Fig. 4     einen optischen Sensor bei einer erfindungsgemäßen Vorrichtung,

Fig. 5     eine Integrationseinrichtung bei einer erfindungsgemäßen Vorrichtung und

Fig. 6     den Signalablauf bei einem erfindungsgemäßen Verfahren.

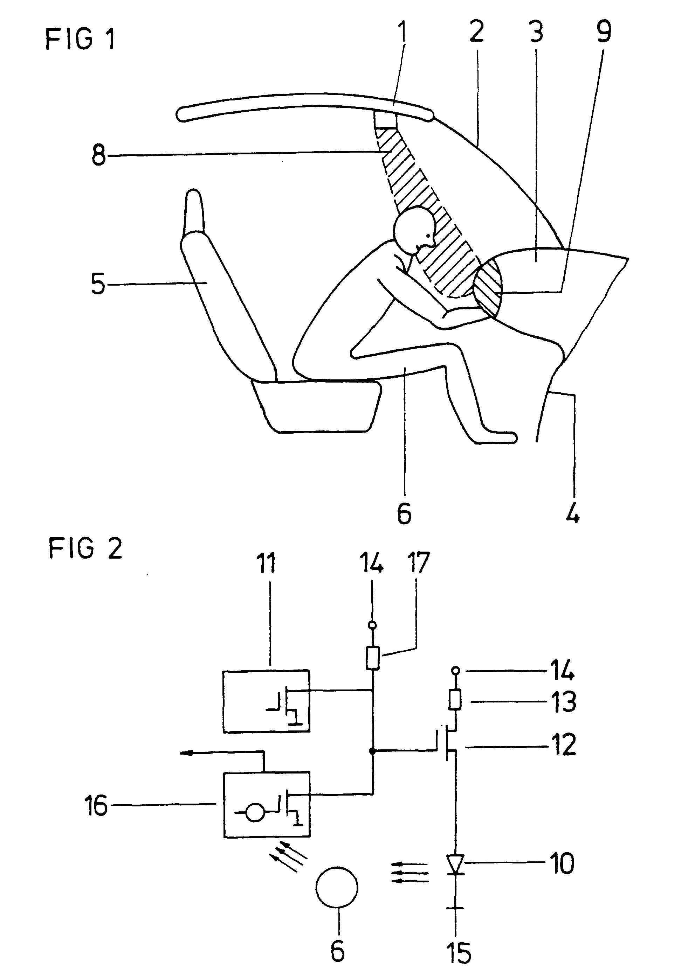

In Fig. 1 ist im Querschnitt eine vordere, beifahrerseitige Fahrgastzelle dargestellt. Dabei ist der Fahrzeuginnenraum durch ein Dach 1, eine Windschutzscheibe 2, ein Armaturenbrett 3 und eine Fußablage 4 begrenzt. Zur Abgrenzung des Fahrzeuginnenraums muss jedoch nicht notwendigerweise das Dach 1 und damit eine geschlossene Fahrgastzelle vorhanden sein. Weiterhin ist ein Fahrzeugsitz 5 vorgesehen, auf dem eine Person 6 in einer mit dem Oberkörper vorverlagerten Position sitzt. Am Dach 1 ist eine Vorrichtung 7 zum Erfassen eines Objektes oder einer Person angeordnet. Diese Einrichtung weist einen eingezeichneten Wirkungsbereich 8 auf. Das Armaturenbrett 3 enthält ein Beifahrerairbagmodul 9 im zusammengefalteten Zustand. Im entfalteten Zustand schießt der Beifahrerairbag in Richtung Kopf der Person 6. Mit der Vorrichtung 7 wird der Gefahrenbereich vor dem zusammengefalteten Airbagmodul in Aufblasrichtung überwacht. Wird ein Insasse oder ein Kindersitz in dem Wirkungsbereich 8 erkannt, so wird ein Auslösen des Airbagmoduls 9 verhindert oder geeignet dosiert. Die Vorrichtung 7 kann aber auch auf den Fahrersitz 5 gerichtet sein und eine Abweichung einer Person aus seiner normalen Sitzposition erfassen. Es sind auch Vorrichtungen denkbar, die den gesamten vorderen Fahrzeuginnenraum mit einer Mehrzahl von Sensoren abtasten und jegliche Arten von Objekt- oder Personenposition aufnehmen können. Die Erfindung ist somit nicht beschränkt auf das konkrete Erfassen eines Abbildes eines Objekts oder einer Person, sondern dient insbesondere auch zur Überwachung eines bestimmten Bereichs oder einer bestimmten Zone im Fahrzeuginnenraum bezüglich des Vorhandenseins eines Objekts oder einer Person. Die Einrichtung ist dabei zur berührungslosen Erfassung ausgelegt.

Der Sensor der Vorrichtung 7 tastet seinen Wirkungsbereich 8 mittels optischer Strahlung, insbesondere infraroter Strahlung ab. Es sind aber auch Strahlungen mit anderen Wellenlängen anwendbar. Der Sensor enthält beispielsweise eine Leuchtdiode, insbesondere einen Infrarotsender in Form einer Laserdiode, der eine oder mehrere Strahlen oder Strahlungsvorhänge aussendet. Der Sensor enthält ferner ein oder mehrere optische Empfangselemente in Form von Fotozellen, die die an einem Objekt oder einer Person reflektierte gestreute Strahlung aufnehmen. Durch Auswertung der gestreuten Strahlung kann der Abstand zwischen dem Sensor und dem Objekt sowie gegebenenfalls eine Kontourierung und genaue Positionsbestimmung im zwei- oder dreidimensionalen Raum bestimmt werden. Vorzugsweise spannt der Sensor mehrere in Fahrtrichtung hintereinandergestaffelte Strahlenvorhänge in der vertikalen Ebene auf und enthält hinsichtlich der Querachse des Fahrzeugs mehrere Empfangselemente je Strahlenvorhang. So ist eine dreidimensionale Personen- oder Objekterkennung gewährleistet, da jedes Empfangselement eine Information zweidimensionaler Wertigkeit liefert und die dritte, vertikale Dimension durch eine Auswertung der Stärke, der Leistung oder des Energieinhalts einer reflektierten Strahlung gewonnen wird. Eine geeignete Einrichtung mit einfachen technischen Mitteln weist beispielsweise nur eine den Entfaltungsraum des Airbags abtastende Lichtschranke auf. Eine Objekt- oder Personenposition wird vorzugsweise mit Hilfe der Methoden der Laufzeitmessung oder der Triangulation ermittelt.

Fig. 2 zeit ein Blockschaltbild einer erfindungsgemäßen Vorrichtung mit einem Laser 10 zum Aussenden von Laserlichtpulsen. Eine Steuereinheit 11 betreibt dabei den Laser 10 mittels eines Transistors 12 im Pulsbetrieb und begrenzt dabei die vom Laser 10 maximal abgebbare Leistung. Dazu ist der Steuereingang des Transistors 12 mit dem Ausgang der Steuereinheit 11 verbunden und seine gesteuerte Strecke ist in Reihe zum Laser 10 sowie in Reihe zu einem Widerstand 13 zur Strombegrenzung zwischen die Pole, 14, 15 einer nicht näher dargestellten Stromversorgung geschaltet. Eine Erfassungseinrichtung 16 empfängt das von der Person 6 gestreute Licht des Lasers 10 und bestimmt daraus fortlaufend die Empfangsleistung, wobei sie beim Erreichen eines einer hinreichenden Empfangsleistung entsprechenden Grenzwertes den Laser 10 über den Transistor 12 abschaltet. Die Steuereinheit 11 und die Erfassungseinrichtung 16 weisen dazu jeweils einen Open-Collector-Ausgang auf, die beide miteinander gekoppelt und über einen Widerstand 17 mit dem einen Pol 14 der Stromversorgung verbunden sind. Auf diese Weise werden die Ausgänge der Steuereinrichtung 11 und der Erfassungseinrichtung 16 miteinander UND-verknüpft. Die Steuereinrichtung 11 gibt somit ein festes Tastverhältnis vor, das seinerseits die maximale Leistung des Lasers 10 bestimmt. Allerdings kann mittels der Erfassungseinrichtung 16 der Impuls verkürzt werden und damit die Leistung auf das minimal erforderliche Maß herabgesetzt werden.

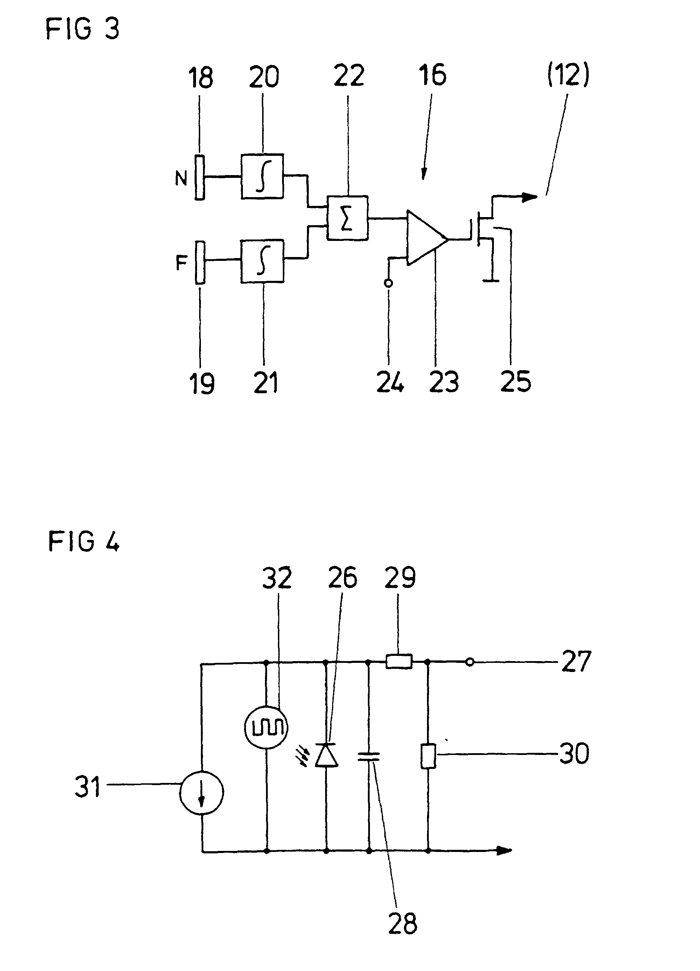

In Fig. 3 ist eine mögliche Ausgestaltung einer Erfassungseinrichtung 16 gemäß Fig. 2 dargestellt. Das gezeigte Ausführungsbeispiel umfasst zwei optische Sensoren 18 und 19, von denen der eine 18 zur Naherfassung und der andere 19 zur Fernerfassung dient. Beiden optischen Sensoren 18, 19 folgt jeweils eine Integrationsstufe 20 bzw. 21, denen wiederum eine gemeinsame Summierstufe 22 nachgeschaltet ist. Der Ausgang der Summierstufe 22 ist mit einer Komparatorstufe 23 gekoppelt, an die zusätzlich ein Grenzwertsignal 24 angelegt ist. Die Komparatorstufe 23 steuert schließlich einen Transistor 25, der seinerseits einen mit dem Steueranschluss des Transistors 12 (in Fig. 3 nicht gezeigt) verbundenen Open-Collector-Ausgang bildet. Es ist somit bei der Erfassungseinrichtung 16 sowohl eine Fernerfassung als auch eine Naherfassung vorgesehen. Die Empfangssignale der Fernerfassung und der Naherfassung werden anschließend jeweils integriert und die Summe aus beiden jeweils integrierten Empfangssignalen bei Fernerfassung und Naherfassung mit einem durch das Grenzwertsignal 24 gegebenen Grenzwert verglichen. Der Grenzwert kennzeichnet dabei eine hinreichende Empfangsleistung, das heißt eine Leistung, die ausreichend ist, um ein Objekt oder eine Person im Innenraum des Fahrzeuges zu erfassen.

Ein bevorzugter optischer Sensor enthält gemäß Fig. 4 eine Fotodiode 26, die durch eine nicht näher dargestellte Spannungsversorgung 27 gespeist und dabei in Sperrrichtung betrieben wird. Der Fotodiode ist dabei zum einen ein Kondensator 28 parallel geschaltet und beiden wiederum ein Widerstand 29 in Reihe geschaltet. Darüber hinaus ist der Reihenschaltung aus Widerstand 29 und Fotodiode 26 bzw. Kondensator 28 ein Wderstand 30 parallel geschaltet. Schließlich sind der Fotodiode noch eine Konstantstromeinprägung 31 sowie eine Impulsstromeinprägung 32 parallel geschaltet.

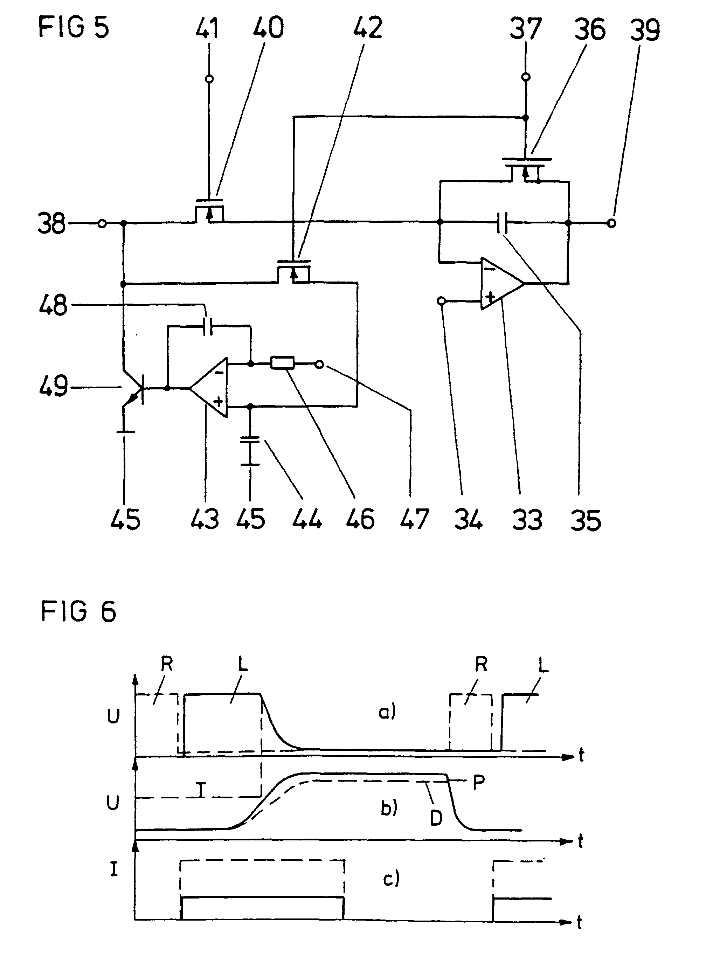

Die Integrationseinrichtungen umfassen bevorzugt eine Einrichtung zur Kompensation des Umgebungslichts. Eine derartige Integrationsstufe ist in Fig. 5 gezeigt. Diese umfasst einen Operationsverstärker 33, dessen nichtinvertierender Eingang an einem Referenzpotential 34 angeschlossen ist und dessen invertierender Eingang unter Zwischenschaltung eines Kondensators 35 mit seinem den Ausgang der Integrationsstufe bildenden Ausgang gekoppelt ist. Dem Kondensator 36 ist die gesteuerte Strecke eines Transistors 36 parallel geschaltet, welcher durch ein Rücksetzsignal 37 gesteuert wird und der zum Entladen des Kondensators 35 und damit zum Rücksetzen der gesamten Integrationsstufe dient. Der invertierende Eingang des Operationsverstärkers ist zudem unter Zwischenschaltung der gesteuerten Strecke eines Transistors 40 mit einem vom jeweiligen optischen Sensor gelieferten Eingangssignal 38 beaufschlagt, wobei der Transistor durch ein Setzsignal 41 gesteuert wird. Die Steuerung des Transistors 40 erfolgt dabei derart, dass bei Auftreten des Setzsignals 41 das Eingangssignal auf den invertierenden Eingang des Operationsverstärkers 33 aufgeschaltet wird. Das Eingangssignal 38 wird zudem unter Zwischenschaltung der gesteuerten Strecke eines durch das Rücksetzsignal 37 gesteuerten Transistors 42 an den invertierenden Eingang eines Operationsverstärkers 43 angelegt. Der nichtinvertierende Eingang des Operationsverstärkers 43 ist zudem über einen Kondensator 44 mit einem Bezugspotential 45 gekoppelt. Der invertierende Eingang des Operationsverstärkers 43 ist zum einen über einen Widerstand 46 an ein Referenzpotential 47 angschlossen und zum anderen über einen Kondensator 48 mit seinem Ausgang verschaltet. Der Ausgang des Operationsverstärkers 43 steuert schließlich einen Transistor 49, dessen gesteuerte Strecke zwischen das Bezugspotential 45 und den das Eingangssignal 38 führenden Knotenpunkt geschaltet ist.

In Fig. 6 ist der Verlauf verschiedener Signale als Spannung U bzw. als Strom I über der Zeit t dargestellt. In der Darstellung a ist zunächst der Verlauf eines Rücksetzsignales R gezeigt. Nach Auftreten des annährend rechteckförmigen Impulses des Rücksetzsignals R wird ein Lasersteuersignal L erzeugt, das den Laser einschaltet. Ein Rücksetzen erfolgt dabei wiederholt in bestimmten Zeitabständen, worauf ein erneutes Einschalten des Lasers erfolgt. Das Ausschalten des Lasers, das durch die negative Flanke des Lasersteuersignals L bewirkt wird, erfolgt dann, wenn die Gesamtempfangsleistung P, die sich aus der Summe der Leistungen bei Nah- und Fernerfassung ergibt, einen Grenzwert T überschreitet. Der Grenzwert T gibt dabei die zum Erfassen erforderliche Mindestleistung an. Mit Hilfe der Gesamtleistung P und der bei der Fernerfassung ermittelten Leistung lässt sich ohne Weiteres die Entfernung D im eingeschwungenen Zustand während eines Impulses bestimmen. In der Darstellung c ist schließlich der Fall ohne erfindungsgemäße Leistungsbegrenzung gezeigt. Es werden dabei zwei mit einer bestimmten konstanten, die maximale Leistung definierende Impulse N und F (jeweils für den Laser zur Fern- und Naherfassung) abgegeben, deren Amplitude jedoch dem jeweiligen Zweck (Nah- und Fernerfassung) entsprechend unterschiedliche Amplituden aufweisen. Wie zu ersehen ist, wird der Impuls erfindungsgemäß früher als durch die maximale Impulsdauer vorgegeben beendet.

Die Entfernungsmessung kann beispielsweise auf einem sogenannten Triangulationsverfahren basieren. Dabei wird das zu vermessende Objekt linienförmig mit einem Laser beispielsweise einem Halbleiterlaser beleuchtet. Dieser "Laserstreifen" wird mit einer Optik auf zwei Fotodioden abgebildet. Da der emittierende Laser und die beobachtende Optik unter einem Winkel zueinander stehen, wandert das Bild des Laserstreifens auf dem Fotodiodenpaar, sobald sich die Entfernung zwischen zu vermessendem Objekt und Sensoranordnung ändert. Die zwei Fotodioden können dreieckig und gegeneinander versetzt angeordnet werden. Eine der beiden Dioden dient zur Naherfassung, die andere zur Fernerfassung. Da die beiden Fotodioden zudem auch gegenläufig angeordnet sind, ergibt sich in Abhängigkeit der Position des Laserstreifens ein unterschiedlicher Fotostrom in beiden Dioden. Die Objektentfernung D ist damit prooortional der Differenz des Fotostroms n bei Naherfassung und des Fotostroms f bei Fernerfassung. Um von den Remissionseigenschaften des betrachteten Objekts unabhängig zu werden, muss auf die Summe der beiden Signale normiert werden. A ist dabei eine Proportionalitätskonstante zur Umrechnung der normierten Differenz in die Entfernung. Formal ergibt sich somit:

$$D = A \cdot (n - f) / (n + f)$$

Die Messung der Entfernung kann noch weiter vereinfacht werden, indem man sich im Zähler nur auf das Element zur Naherfassung oder das Element zur Fernerfassung beschränkt und die Differenzbildung unterlässt. Die daraus resultierende Gleichung mit einer geänderten Proportionalitätskonstante B ist dann:

$$D = B_f \cdot f / (n + f)$$

oder

$$D = B_n \cdot n / (n + f)$$

Wenn die Addition, Subtraktion und Division der Signale digital erfolgen soll, was bei modernen Anordnungen in der Regel der Fall ist, muss die Dynamik des verwendeten Analog-Digital-Umsetzers zur Umwandlung der beiden Fotoströme sehr hoch sein, um den verschiedenen Remissionsfaktoren von unterschiedlichen Objekten gerecht zu werden. Insbesondere sind die notwendigen Anforderungen an die vorausgehenden Analogschaltungen bezüglich Signal-zu-Rausch-Verhältnis sehr hoch. Um dabei mit einer vertretbaren Dynamik auszukommen, wurde bisher die Laserleistung vom Mikrokontroller über die Pulslänge eingestellt. Es ist jedoch ersichtlich, dass zur Ermittlung eines gültigen Messwertes oft mehrfach Laserpulse ausgegeben werden müssen. Zudem ist noch auf die sehr rechenintensive Division (zum Beispiel 16 Bit) hinzuweisen, die den Einsatz von kleinen und billigen Mikrokontrollern ausschließt.

Statt die Länge des Laserpulses direkt zu steuern, gibt bei der vorliegenden Erfindung der Kontroller beispielsweise nur eine Freigabe an eine externe Schaltung zur Erzeugung des Pulses, nachdem er beispielsweise mittels zweier Analogschaltuner die Eingangsintegratoren auf Null gesetzt hat. Nach Erhalt des Freigabesignals wird der Laser eingeschaltet und die Integratoren beginnen die Intensität des remittierten Lichts über die beiden Fotoströme zu messen. Die beiden Ausgangssignale der Elemente zur Nah- und Fernerfassung werden dabei über einen Summierer addiert und einem Komparator zugeleitet. Sobald der am Komparator eingestellte Schwellenwert überschritten wird, wird der Laser abgeschaltet und gleichzeitig die Verbindung zwischen den Fotodioden und den zugehörigen Integratoren mittels Analogschaltern unterbrochen. Der Einfluss von Fremdlicht wird auf diese Weise minimiert, da die Integratoren nur so lange arbeiten, wie auch der Laser das Objekt beleuchtet.

Da die Höhe der Vergleichsschwelle bekannt ist, kann die Summe der Signalintensität von Nah- und Fernerfassung im Nenner der obenstehenden Gleichung zu 1 dividiert werden bzw. in die Proportionalitätskonstante A mit aufgenommen werden. Damit entfällt auch die Division, was den Einsatz von billigen Kontrollern ermöglicht. Die Ermittlung der Entfernung beschränkt sich auf die Messung der Signalintensität bei Nah- und Fernerfassung sowie die Differenzbildung.

Wenn man sich, wie oben ebenfalls erwähnt, nur entweder auf Naherfassung oder auf Fernerfassung alleine bezieht, reduziert sich der Arbeitsaufwand für den Mikrokontroller sogar auf die Ermittlung eines einzigen Messwertes. Mehrfache Pulse ohne sinnvolles Ergebnis sind bei der genannten Änderung des Messverfahrens nicht mehr nötig, wodurch die Messgeschwindigkeit erhöht und die Strahlungsimmission erhöht wird.

Die Erfindung weiterbildend kann vorgesehen werden, dass entsprechend der Länge des Freigabesignals eine Endabschaltung erfolgt, die verhindert, dass der Laser unbegrenzt strahlt, wenn die Vergleichsschwelle durch eine Störung oder zu geringe Remission nicht erreicht wird.

**Patentansprüche**

1. Vorrichtung zum Erfassen eines Objektes oder einer Person (6) im Innenraum eines Fahrzeuges mit einem Laser (10) zum Aussenden von Laserlichtpulsen und einem optischen Empfänger (18, 19) oder Sensor zum Empfangen von an dem Objekt oder der Person (6) reflektierter Laserlichtpulse, wobei
eine mit dem Laser (10) verbundene Erfassungseinrichtung (16), die fortlaufend die Empfangsleistung erfasst, **dadurch gekennzeichnet daß** die Erfassungseinrichtung bei Erreichen eines einer hinreichenden Empfangsleistung entsprechenden Grenzwertes (24) den Laserlichtpuls abschaltet.

2. Vorrichtung nach Anspruch 1,

**dadurch gekennzeichnet, dass** die Erfassungseinrichtung (16) mit zwei optischen Sensoren (18, 19) gekoppelt ist, von denen der eine (19) zur Fernerfassung und der andere (18) zur Naherfassung vorgesehen ist,

dass den beiden Sensoren (18, 19) jeweils eine Integrationseinrichtung nachfolgt und

dass den Integratoren (20, 21) eine Komparatorstufe (23) nachgeschaltet ist, die die Summe der Ausgangssignale der Integrationseinrichtungen (20, 21) mit dem Grenzwert (24) vergleicht.

3. Vorrichtung nach Anspruch 1 oder 2,
**dadurch gekennzeichnet, dass** die Sensoren (18, 19) zumindest eine Fotodiode aufweisen.

4. Vorrichtung nach Anspruch 2 oder 3,
**dadurch gekennzeichnet, dass** die Integrationseinrichtung eine Einrichtung zur Umgebungslichtkompensation aufweist.

5. Vorrichtung nach Anspruch 4,
**dadurch gekennzeichnet,**
**dass** die Einrichtung zur Umgebungslichtkompensation ein Integratorelement aufweist, das das Ausgangssignal des jeweiligen Sensors abzüglich eines Korrektursignals integriert.

6. Verfahren zum Erfassen eines Objektes oder einer Person im Innenraum eines Fahrzeuges, bei dem mindestens ein Laserlichtpuls ausgesendet wird und der an einem Objekt oder einer Person reflektierte Laserlichtpuls empfangen wird,
**dadurch gekennzeichnet, dass** fortlaufend die Empfangsleistung erfasst und bei Erreichen eines einer hinreichenden Empfangsleistung entsprechenden Grenzwertes der Laserlichtpuls abgeschaltet wird.

7. Verfahren nach Anspruch 6,
**dadurch gekennzeichnet, dass** zum Empfang des Laserlichtpulses eine Fernerfassung oder eine Naherfassung vorgesehen ist, dass die Empfangssignale bei Fernerfassung und Naherfassung jeweils integriert werden und dass die Summe aus den beiden jeweils integrierten Empfangssignalen bei Fernerfassung und Naherfassung mit einem Grenzwert verglichen werden.

**Claims**

1. Device for detecting an object or a person (6) in the passenger compartment of a vehicle with a laser (10) for emitting laser light pulses and an optical receiver (18, 19) or sensor for receiving laser light pulses reflected off the object or the person (6),
**characterised in that** a detection unit (16) connected to the laser (10), detects the receiving power continuously , said detector unit switching off the laser light pulse when a limit value (24) corresponding to an adequate receiving power is reached.

2. Device according to Claim 1,
**characterised in that** the detection unit (16) is linked to two optical sensors (18, 19), one of which (19) is for remote detection and the other (18) for local detection,
that each sensor (18, 19) is followed by an integration unit and that a comparator stage (23) is connected downstream from t he integrators (20, 21) and this compares the sum of the output signals of the integration units (20, 21) with the limit value (24) .

3. Device according to Claim 1 or 2,
**characterised in that** the sensors (18, 19) have at least one photodiode.

4. Device according to Claim 2 or 3,
**characterised in that** the integration unit has a device to compensate for ambient light.

5. Device according to Claim 4,
**characterised in that** the unit to compensate for ambient light has an integrator element, which integrates the output s ignal of the respective sensor minus a correction signal.

6. Method for detecting an object or a person in the passenger compartment of a vehicle, in which at least one laser light pulse is emitted and the laser light pulse reflected off an object or a person is received,
**characterised in that** the receiving power is detected continuously and the laser light pulse is switched off when a limit value corresponding to an adequate receiving power is reached.

7. Method according to Claim 6,
**characterised in that** there is provision for remote detection or local detection at the point of receipt of the laser light pulse, that the received signals for remote detection and local detection respectively are integrated and that the sum of the two respectively integrated received signals for remote detection and local detection is compared with a limit value.

**Revendications**

1. Dispositif pour détecter un objet ou une personne (6) dans l'espace intérieur d'un véhicule, comprenant un laser (10) pour émettre des impulsions de lumière laser et un récepteur optique (18, 19) ou capteur pour détecter des impulsions de lumière laser réfléchies sur l'objet ou la personne (6), dans lequel un dispositif de détection (16) relié au laser (10) détecte continuellement la puissance de réception,

   **caractérisé en ce que** le dispositif de détection déconnecte l'impulsion de lumière laser lorsqu'une valeur limite (24) correspondant à une puissance de réception suffisante est atteinte.

2. Dispositif selon la revendication 1,
   **caractérisé en ce que** le dispositif de détection (16) est couplé à deux détecteurs optiques (18, 19) dont l'un (19) est prévu pour la détection éloignée et l'autre (18) pour la détection proche,
   **en ce qu'**un dispositif d'intégration est prévu en aval de chacun des deux capteurs (18, 19) et
   **en ce qu'**un étage comparateur (23) est connecté en aval des intégrateurs (20, 21), lequel étage compare la somme des signaux de sortie des dispositifs d'intégration (20, 21) à la valeur limite (24).

3. Dispositif selon la revendication 1 ou 2,
   **caractérisé en ce que** les capteurs (18, 19) présentent au moins une photodiode.

4. Dispositif selon la revendication 2 ou 3,
   **caractérisé en ce que** le dispositif d'intégration comprend un dispositif pour la compensation de la lumière ambiante.

5. Dispositif selon la revendication 4,
   **caractérisé en ce que** le dispositif pour la compensation de la lumière ambiante comprend un élément intégrateur qui intègre le signal de sortie du capteur correspondant après déduction d'un signal de correction.

6. Procédé pour détecter un objet ou une personne dans l'espace intérieur d'un véhicule, dans lequel au moins une impulsion de lumière laser est émise et l'impulsion de lumière laser réfléchie sur un objet ou une personne est reçue,
   **caractérisé en ce que** la puissance de réception est continuellement détectée et que, lorsqu'une valeur limite correspondant à une puissance de réception suffisante est atteinte, l'impulsion de lumière laser est déconnectée.

7. Procédé selon la revendication 6,
   **caractérisé en ce que**, pour la réception de l'impulsion de lumière laser, il est prévu une détection éloignée ou une détection proche, **en ce que** les signaux de réception de la détection éloignée et de la détection proche sont intégrés et **en ce que** la somme des deux signaux de réception intégrés lors de la détection éloignée et de la détection proche est comparée à une valeur limite.

FIG 1

FIG 2

## FIG 3

## FIG 4

FIG 5

FIG 6